# EUROPÄISCHE PATENTSCHRIFT

(11) **EP 2 363 521 B1**
(45) Veröffentlichungstag und Bekanntmachung des Hinweises auf die Patenterteilung: **20.04.2016**
(21) Anmeldenummer: 11153035.8
(22) Anmeldetag: 02.02.2011
(51) Int. Cl.: D04H 3/14, B29C 43/24

(54) **Thermobonding-Kalander**
Thermobonding calender
Calandre de thermocollage

(30) Priorität: 02.03.2010 DE 102010000602
(43) Veröffentlichungstag der Anmeldung: 07.09.2011
(73) Patentinhaber: Andritz Küsters GmbH, 47805 Krefeld (DE)
(72) Erfinder: Lukas, Andreas, 47665 Sonsbeck (DE); Walterfang, Johannes, 47839 Krefeld (DE); Gerharz, Stephan, 53844 Troisdorf (DE)
(74) Vertreter: Kluin, Jörg-Eden

(56) Entgegenhaltungen:
- EP-A2- 0 623 441
- DE-A1- 3 239 467
- DE-A1-102007 006 449
- DE-U1- 9 408 597

## Beschreibung

Die Erfindung betrifft einen Thermobonding-Kalander zur Verfestigung einer Lage von Filamenten aus thermoplastischem Material zu einer Vliesbahn, mit einem von einer Oberwalze und einer Unterwalze gebildeten Walzenspalt, wobei die Drehachsen der Walzen in einer Drehachsenebene liegen, und mit einer Zuführeinrichtung zum Zuführen der Filamente zum Walzenspalt.

Ein derartiger Kalander ist aus der DE 37 12 276 C1 bekannt.

Zur Verfestigung einer Lage von Filamenten aus thermoplastischem Material zu einer Vliesbahn ist es bekannt, die Filamente mit Hilfe einer Zuführeinrichtung einem zwischen einer Oberwalze und einer Unterwalze gebildeten Walzenspalt zuzuführen. Die beiden Walzen sind parallel übereinander angeordnet, d. h. deren Drehachsen liegen in einer senkrechten Drehachsenebene.

Die Zuführeinrichtung umfasst regelmäßig ein Transportband, welches um eine Transportbandwalze umgelenkt wird, die in Zuführrichtung vor dem Walzenspalt angeordnet ist. Die mit Hilfe des Transportbandes zugeführten Filamente fallen auf der von dem Transportband umschlungenen Seite der Transportbandwalze etwa senkrecht nach unten auf den Außenumfang der rotierenden Unterwalze, werden in den Walzenspalt mitgerissen und in diesem thermobondiert. Hierzu sind die Unter- und/oder die Oberwalze beheizbar und/oder als Gravurwalzen ausgebildet.

Zur Erzielung einer möglichst hohen Effizienz und Produktqualität ist es von wesentlicher Bedeutung, dass der Anteil von Filamenten, die von dem Transportband nicht in den Walzenspalt gelangen und zu der Vliesbahn verfestigt werden, möglichst gering ist.

Bisher wird versucht, dieses Ziel durch Optimierung der Position und des Durchmessers der Transportbandwalze zu erreichen. Aus der EP 0 623 441 ist ein Kalander bekannt, dessen Walzenachsen übereinander, jedoch nicht in einer vertikalen Ebene angeordnet sind. Die Walzenachsen liegen in einer spitzwinklig zur vertikal verlaufenden Ebene. Die DE 32 39 467 A1 zeigt eine Walzenanordnung, bei der über einen so genannten Aufnahmeschuh einem Walzenspalt Material zugeführt wird. Es ist ein Kalander gezeigt, mit zwei schräg übereinander angeordneten Walzen. Aus der EP 0 867 550 A1 ist eine Anordnung bekannt, bei der die den Walzenspalt bildenden Walzen auf gleicher Höhe hintereinander angeordnet sind.

Ausgehend von diesem Problem liegt der Erfindung die Aufgabe zugrunde, einen verbesserten Thermobonding-Kalander zu schaffen.

Diese Aufgabe wird durch den in Anspruch 1 wiedergegebenen Thermobonding-Kalander gelöst.

Bei dem erfindungsgemäßen Thermobonding-Kalander ist die Drehachsenebene, in welcher die Drehachsen der Ober- und der Unterwalze liegen, um einen Winkel geneigt, so dass die Drehachse der Oberwalze in Zuführrichtung gesehen hinter der Drehachse der Unterwalze angeordnet ist.

Es hat sich überraschender Weise gezeigt, dass durch diese technisch einfach zu verwirklichende Maßnahme, die zur Folge hat, dass die mit Hilfe der Zuführrichtung zugeführten Filamente unter einem stumpferen Winkel auf den Außenumfang der Unterwalze auftreffen, zu einem im Vergleich zum Stand der Technik erheblich größeren Anteil von der Unterwalze mitgerissen und so dem Walzenspalt zugeführt werden. Insbesondere wird durch die erfindungsgemäße Maßnahme der Anteil der durch das Transportband von der Lage separierten Filamente reduziert, die - wenn sie nicht in den Walzenspalt gelangen - sich als Verschmutzung unterhalb des Transportbandes sammeln. Es reduziert sich somit der mit der Reinigung des Thermobonding-Kalanders verbundene Aufwand. Ferner wird die Prozesssicherheit erhöht, da die Gefahr, dass von der Lage separierte Filamente unkontrolliert von dem Transportband mitgerissen werden und in den Walzenspalt gelangen, verringert ist.

Es hat sich gezeigt, dass der Winkel, um den die Drehachse der Oberwalze in Zuführrichtung gesehen hinter der Drehachse der Unterwalze angeordnet ist, vorzugsweise zwischen 5° und 25°, besonders bevorzugt etwa 15° beträgt.

Als Zuführeinrichtung kann bei dem erfindungsgemäßen Thermobonding-Kalander grundsätzlich jede geeignete Einrichtung Verwendung finden. Wegen der Einfachheit ihrer Konstruktion und der mit ihr erzielbaren Betriebssicherheit umfasst die Zuführeinrichtung des erfindungsgemäßen Thermobonding-Kalanders jedoch, wie beim Stand der Technik, ein Transportband, welches um eine Transportbandwalze umgelenkt wird, die in Zuführrichtung vor dem Walzenspalt angeordnet ist.

Die Transportbandwalze ist derart angeordnet, dass die senkrechte Tangente der vom Transportband umschlungenen Seite etwa tangential an der Oberwalze anliegt.

Vorzugsweise ist die Unterwalze als Gravurwalze ausgebildet, da diese aus der Lage separierte Filamente besonders effektiv mitreißt.

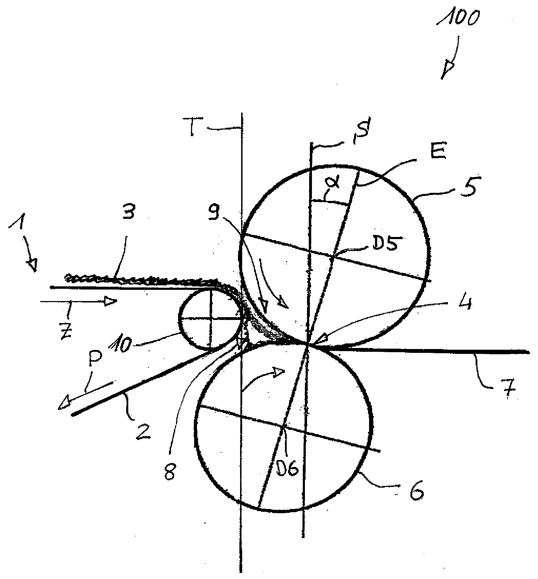

In der Zeichnung ist - schematisch - ein erfindungsgemäßer Thermobonding-Kalander in einer Seitenansicht dargestellt.

Der als Ganzes mit 100 bezeichnete Thermobonding-Kalander umfasst eine Fördereinrichtung 1 mit einem in Richtung des Pfeiles P umlaufenden Band 2. Mittels des Bandes 2 wird eine Lage 3, die Filamente aus thermoplastischem Material umfasst oder aus solchen besteht, einem Bearbeitungsspalt 4 zugeführt, der zwischen einer Oberwalze 5 und einer Unterwalze 6 gebildet ist. Die Oberwalze 5 kann als glatte, die Unterwalze 6 als auf ihrem Walzenumfang ein Relief aufweisende Gravurwalze ausgebildet sein.

Um die Energiezufuhr, die zum Verschweißen der Filamente erforderlich ist, zu bewerkstelligen, kann zumindest die Gravurwalze beheizt sein.

Beim Durchlaufen des Walzenspalts 4 wird die Lage 3 von Filamenten zu einer Vliesbahn 7 thermobondiert, indem beim Durchlauf durch den Walzenspalt 4 ein Teil der unregelmäßig angeordneten Filamente miteinander verschweißt wird.

Damit nun ein erheblicher Anteil von Filamenten oder Partikeln, die von dem Transportband 2 aus der Lage 3 herausgelöst worden und nicht als Lage 3 über den Einlaufbereich 9 in den Walzenspalt 4 gelangt sind und auf der umschlungenen Seite einer Transportbandwalze 10 etwa senkrecht herabfallen, ebenfalls dem Walzenspalt 4 zugeführt wird, ist die Oberwalze 5 in Zuführrichtung Z gesehen aus der zur Unterwalze 6 vertikalen Anordnung nach hinten versetzt positioniert. Die Drehachsen D5 und D6 der Oberwalze 5 und der Unterwalze 6 liegen somit in einer Drehachsenebene E, die gegenüber der Senkrechten S um einen Winkel α geneigt ist, wie im hier dargestellten Ausführungsbeispiel um etwa 15°.

Die Position und der Durchmesser der Transportbandwalze 10 sind so gewählt, dass die senkrechte Tangente T der vom Transportband 2 umschlungenen Seite etwa tangential an der Oberfläche der Oberwalze 5 anliegt.

### Bezugszeichenliste:

- 100: Thermobonding-Kalander
- 1: Fördereinrichtung
- 2: Band
- 3: Lage
- 4: Walzenspalt
- 5: Oberwalze
- 6: Unterwalze
- 7: Vliesbahn
- 8: Teil
- 9: Einlaufbereich
- 10: Transportbandwalze
- D5: Drehachse Oberwalze
- D6: Drehachse Unterwalze
- E: Ebene
- P: Umlaufrichtung
- T: Tangente
- Z: Zuführrichtung

## Patentansprüche

1. Thermobonding-Kalander (100) zur Verfestigung einer Lage (3) von Filamenten aus thermoplastischem Material zu einer Vliesbahn,
mit einem von einer Oberwalze (5) und einer Unterwalze (6) gebildeten Walzenspalt (4), wobei die Drehachsen (D5, D6) der Walzen (5, 6) in einer Drehachsenebene (E) liegen, und mit einer Zuführeinrichtung (1) zum Zuführen der Lage (3) von Filamenten zum Walzenspalt, wobei die Zuführeinrichtung (1) ein Transportband (2) umfasst, welches um eine Transportbandwalze (10) umgelenkt wird, die in Zuführrichtung (Z) vor dem Walzenspalt (4) angeordnet ist, wobei die Drehachsenebene (E) zur Senkrechten (S) derart um einen Winkel (α) geneigt ist, dass die Drehachse (D5) der Oberwalze (5) in Zuführrichtung (Z) gesehen hinter der Drehachse (D6) der Unterwalze (6) angeordnet ist, **dadurch gekennzeichnet, dass** die Transportbandwalze (10) derart angeordnet ist, dass die senkrechte Tangente (T) der vom Transportband (2) umschlungenen Seite etwa tangential an der Oberwalze (5) anliegt.

2. Thermobonding-Kalander nach Anspruch 1, **dadurch gekennzeichnet, dass** der Winkel (α) zwischen 5° und 25° beträgt.

3. Thermobonding-Kalander nach Anspruch 2, **dadurch gekennzeichnet, dass** der Winkel (α) etwa 15° beträgt.

4. Thermobonding-Kalander nach einem der Ansprüche 1 bis 3, **dadurch gekennzeichnet, dass** die Unterwalze (6) eine Gravurwalze ist.

## Claims

1. Thermobonding calender (100) for stabilizing a layer (3) of filaments made of thermoplastic material to form a length of non-woven fabric, with a roller gap (4) formed by an upper roller (5) and a lower roller (6), wherein the axes of rotation (D5, D6) of the rollers (5, 6) lie on a plane of the axes of rotation (E), and with a delivery device (1) for delivering the layer (3) of filaments to the roller gap, wherein the delivery device (1) comprises a conveyor belt (2) which is redirected around a conveyor belt roller (10) which is disposed before the roller gap (4) in the delivery direction (Z), wherein the plane of the axes of rotation (E) is inclined with respect to the vertical (S) by an angle (α) in such a way that the axis of rotation (D5) of the upper roller (5) is disposed behind the axis of rotation (D6) of the lower roller (6) when viewed in the delivery direction (Z), **characterized in that** the conveyor belt roller (10) is disposed in such a way that the vertical tangent (T) of the side wrapped around by the conveyor belt (2) bears approximately tangentially against the upper roller (5).

2. Thermobonding calender according to claim 1, **characterized in that** the angle (α) is between 5° and 25°.

3. Thermobonding calender according to claim 2, **characterized in that** the angle (α) is approximately 15°.

4. Thermobonding calender according to one of claims 1 to 3, **characterized in that** the lower roller (6) is a gravure roller.

## Revendications

1. Calandre de thermocollage (100) pour la consolidation d'une couche (3) de filaments en matière thermoplastique en une bande non tissée,
avec une fente (4) formée par un cylindre supérieur (5) et un cylindre inférieur (6), les axes de rotation (D5, D6) des cylindres (5, 6) s'étendant dans un plan d'axes de rotation (E), et avec un dispositif d'alimentation (1) destiné à alimenter la couche (3) de filaments vers la fente, dans laquelle le dispositif d'alimentation (1) comprend une bande transporteuse (2) déviée autour d'un cylindre de bande transporteuse (10) agencé en amont de la fente (4) dans la direction d'alimentation (Z),
dans laquelle le plan d'axes de rotation (E) est incliné selon un angle (α) par rapport à la verticale (S), de telle façon que l'axe de rotation (D5) du cylindre supérieur (5) est agencé derrière l'axe de rotation (D6) du cylindre inférieur (6) vu dans la direction d'alimentation (Z), **caractérisée en ce que** le cylindre de bande transporteuse (10) est agencé de telle façon que la tangente verticale (T) du côté entouré par la bande transporteuse (2) s'applique approximativement tangentiellement sur le cylindre supérieur (5).

2. Calandre de thermocollage selon la revendication 1, **caractérisée en ce que** l'angle (α) est compris entre 5° et 25°.

3. Calandre de thermocollage selon la revendication 2, **caractérisée en ce que** l'angle (α) mesure environ 15°.

4. Calandre de thermocollage selon l'une des revendications 1 à 3, **caractérisée en ce que** le cylindre inférieur (6) est un cylindre de gravure.
